# EUROPÄISCHE PATENTANMELDUNG

(11) **EP 0 879 915 A2**
(43) Veröffentlichungstag der Anmeldung: **25.11.1998**
(21) Anmeldenummer: 98109162.2
(22) Anmeldetag: 20.05.1998
(51) Int. Cl.: D06H 5/00, C09J 5/00, E04F 10/02

(54) **Verfahren zum Herstellen eines Tuches, insbesondere eines Markisentuches, aus einzelnen Tuchbahnen**

(30) Priorität: 24.05.1997 DE 19721781
(71) Anmelder: Zechmeister, Ernst, 74360 Ilsfeld-Auenstein (DE)
(72) Erfinder: Zechmeister, Ernst, 74360 Ilsfeld-Auenstein (DE)
(74) Vertreter: Kastner, Hermann, Dipl.-Ing., Patentanwalt

(57) **Zusammenfassung**

Bei dem Verfahren zum Herstellen eines Tuches, insbesondere eines Markisentuches (10) aus mehreren Tuchbahnen (11; 12) werden je zwei der Tuchbahnen (11; 12) mit den einander zugekehrten Längsrändern (13; 14) in der gleichen Ebene nebeneinander angeordnet. Auf der einen Seite oder auf beiden Seiten der Tuchbahnen (11; 12) wird ein Klebstoffauftrag (23) angebracht, der den Randbereich (21; 22) der beiden Tuchbahnen (11; 12) durchtränkt und der den Zwischenraum (19) zwischen dem Längsrand der beiden Tuchbahnen (11; 12) ausfüllt. Soweit der Klebstoff es erfordert, wird er durch geeignete Maßnahmen verfestigt und damit die beiden Tuchbahnen (11; 12) dauerhaft miteinander verbunden.

## Beschreibung

Zum Beschatten von Schaufenstern, Sitzplätzen, Terassen, Balkonenund dergleichen, aber auch von Wintergärten, werden sehr häufig Tücher eingesetzt, die bei Nichtgebrauch, z.B. bei Nacht oder bei Regenwetter, auf eine Tuchwelle aufgewickelt werden und die für den Gebrauch mittels mechanischer Vorrichtungen von der Tuchwelle abgewickelt werden und über der zu beschattenden Fläche aufgespannt werden. Für das Aufwickeln des Tuches ist die Tuchwelle mit einem handbetätigten oder mit einem maschinell betätigten Antrieb ausgerüstet. Für das Abwickeln des Tuches von der Tuchwelle und für das Aufspannen ist der von der Tuchwelle abgekehrte Rand des Tuches mit einer sogenannten Ausfallstange versehen. Bei Markisen wird die Ausfallstange im allgemeinen von federbelasteten Gelenkarmen gehalten, mit denen eine Ausladung der Markise bis ca. 4 m möglich ist. Bei Wintergartenbeschattungen wird die Ausfallstange in der Regel in Führungen geführt und von einem Gegenzugsystem, meist ein Seilzugsystem, sowohl in der Ausziehrichtung wie auch in der Einziehrichtung bewegt. Mit einem solchen Gegenzugsystem ist eine Ausladung bis ca. 7 m möglich. Die Tücher für Markisen und Wintergertanbaechattungen werden im folgenden der Einfachheit halber nur noch als Markisentücher bezeichnet.

Für die Markisentücher werden Tuchbahnen verwendet, die üblicherweise 1,2 m breit sind. Da Markisen und Wintergartenbeschattungen im allgemeinen eine größere Breite als 1,2 m haben, muß das Markisentuch aus mehreren Tuchbahnen zusammengesetzt werden. An den Verbindungsstellen werden je zwei einander benachbarte Tuchbahnen entlang ihrem einander zugekehrten Längsrand mit einer Überlappung von etwa 2 cm übereinandergelegt und mit zwei Längsnähten zusammengenäht, die im folgenden Verbindungsnähte genannt werden. An den beiden Außenrändern des Markisentuches wird bei den beiden außen gelegenen Tuchbahnen der äußere Längsrand um etwa 3 bis 5 cm umgeschlagen und ebenfalls mit zwei oder mehr Längsnähten vernäht, die im folgenden Saumnähte genannt werden. Im Bereich der Verbindungsnähte und der Saumnähte hat das Markisentuch die doppelte Dicke gegenüber den übrigen Flächenbereichen, wobei durch die Nahtfaden noch eine gewisse zusätzliche Verdickung des Markisentuches hinzukommt. Das hat mehrere Nachteile zur Folge.

Beim Aufwickeln auf die Tuchwelle hat der Tuchwickel im Bereich der Verbindungsnähte und der Saumnähte die doppelte Dicke und damit eine größere Umfangslänge als in den Flächenbereichen dazwischen. Dadurch wird das Tuch in den Nahtbereichen stärker und in den Zwischenbereichen weniger stark gespannt. Durch diese unterschiedliche Spannung entstehen vor allem in der Nachbarschaft der Nahtbereiche Falten, die wie ein Waffel- oder Fischgrätmuster aussehen und die vor allem bei teilweise aufgespanntem Markisentuch einen sehr schlechten ästhetischen Eindruck ergeben.

In den Nahtbereichen hat das Markisentuch wegen der doppelten Tuchlage in der Längsrichtung eine größere Formfestigkeit als in den Zwischenbereichen. Wenn im Laufe der Zeit die Ausrüstung des Markisentuches sich verringert und das Markisentuch seine Steifigkeit verliert und es weicher und labiler wird, hängt es unter dem Einfluß von Wind und Regen in den Zwischenbereichen stärker durch als in den Nahtbereichen. Das Markisentuch wirkt so, als werde es in den Nahtbereichen durch mechanische Verstärkungen gestützt. Es entsteht eine Art Hängematteneffekt. Bei geringer Längsneigung des Markisentuches wird bei Regen die Wassersackbildung verstärkt.

Bei großer Ausladung, wie es bei Wintergartenbeschattungen mit einem Gegenzugsystem möglich ist, muß eine verhältnismäßig große Tuchspannung aufgebracht werden, damit das Tuch im aufgespannten Zustand einigermaßen ordentlich aussieht.

Zu den ungleichen Spannungen einerseits in den Nahtbereichen und andererseits in den Zwischenbereichen kommt beim Aufwickeln eines solchen Tuches noch hinzu, daß sich die Tuchwelle und die Ausfallstange elastisch verbiegen und sie in der Mitte stärker als in den Endbereichen nachgeben. Dadurch entsteht im Tuch im Bereich der Saumnähte eine größere Spannung als im Bereich der Verbindungsnähte, von den Zwischenbereichen ganz zu schweigen. Dadurch wird es im Bereich der Saumnähte strammer auf die Tuchwelle aufgewickelt als in den dazwischenliegenden Bereichen. Das wiederum hat zur Folge, daß das Tuch im Bereich der Saumnähte stärker gedehnt wird, und zwar zunächst elastisch, was aber im Laufe der Zeit eine stärkere bleibende Dehnung des Markisentuches zur Folge hat. Das Markisentuch wird also im Bereich seiner Saumnähte allmählich länger als in den weiter innen gelegenen Flächenbereichen. Dadurch hängt das Markisentuch im aufgespannten Zustand seitlich stärker durch. Bei Windeinwirkung neigt es in den Randbereichen zum Flattern. Bei Wintergartenbeschattungen kann das stärkere Durchhängen der äußeren Bereiche dazu führen, daß das Markisentuch auf den Außenflächen des Wintergartens und seinen Glasscheiben aufliegt und bei Windeinfluß daran scheuert.

Ein weiteres Problem stellen die Nähte dar, weil bei ihren Nähfäden die Festigkeit im Laufe der Zeit oftmals schneller abnimmt als bei dem Markisentuch. Dadurch können die Nähte, zumindest abschnittweise, aufgehen. An diesen Stellen wird das Markisentuch für Regen und Wind durchlässig. Die Lebensdauer einer Markise herkömmlicher Art wird daher meist durch die Lebensdauer ihrer Nähte bestimmt.

Der Erfindung liegt die Aufgabe zugrunde, ein Verfahren anzugeben, mit dem einzelne Tuchbahnen zu einem Tuch, insbesondere zu einem Markisentuch, miteinander verbunden werden, bei dem die oben geschilderten Nachteile der nach herkömmlichen Verfahren miteinander verbundenen Tuchbahnen zumindest verringert sind oder ganz vermieden werden. Diese Aufgabe wird durch ein Verfahren mit den im Anspruch 1 angegebenen Verfahrensschritten gelöst.

Dadurch, daß zwei einander benachbarte Tuchbahnen entlang ihres einander zugekehrten Längsrandes in der gleichen Ebene nebeneinander angeordnet werden und zumindest auf der einen Seite der beiden Tuchbahnen ein Klebstoffauftrag angebracht wird, der sowohl den Randbereich der beiden Tuchbahnen zumindest zum Teil durchtränkt wie auch den Zwischenraum zwischen dem Längsrand der beiden Tuchbahnen zumindest zum Teil ausfüllt, werden nach dem Verfestigen des Klebstoffauftrages die beiden Tuchbahnen durch die Klebstoffschicht miteinander dauerhaft verbunden. Da die beiden Tuchbahnen dabei einander nicht überlappen, wird die nachteilige Verdoppelung des Markisentuches im Bereich der Verbindungsnähte und die daraus sich ergebenden Nachteile der nach dem herkömmlichen Verfahren verbundenen Tuchbahnen vermieden.

Mit einer Ausgestaltung nach Anspruch 2 wird erreicht, daß auch der Klebstoffauftrag im gesamten Randbereich praktisch keine größere Dicke als die beiden Tuchbahnen selbst hat. Außerdem wird durch diesen Vorgang der Klebstoff stärker in die Hohlräume des Gewebes der beiden Tuchbahnen hineingedrückt, so daß die Stoffbahnen besser mit dem Klebstoff durchtränkt sind und damit der Klebstoffanteil im Gewebe der Tuchbahnen erhöht wird und die Verbindung zwischen dem Gewebe und dem Klebstoff inniger wird. Dadurch wird die Kraftübertragungsfähigkeit des Klebstoffauftrages merklich erhöht.

Durch eine Ausgestaltung nach Anspruch 3 wird die Auswahl der Klebstoffe erweitert und ihre Abstimmung auf das Gewebe der Tuchbahnen verbessert.

Durch eine Ausgestaltung nach Anspruch 4 wird das Eindringen des Klebstoffes in die Tuchbahnen und das Durchtränken der Tuchbahnen mit Klebstoff vor allem in den Fällen verbessert, in denen die Tuchbahnen an ihrer Oberfläche oder insgesamt mit Mitteln ausgerüstet sind, durch die zwar ihre Verwendung als Markisentuch verbessert wird, zugleich aber auch die Benetzungsfähigkeit für den Klebstoff vermindert wird. Das gleiche wird durch eine Ausgestaltung nach Anspruch 5 erreicht, wenn die Tuchbahnen zwar nach dem Auftragen des Klebstoffes aber noch vor dem Abschluß des Verfestigungsvorganges des Klebstoffes durchstochen werden, so daß der Klebstoff Gelegenheit hat, stärker in das Gewebe der Tuchbahnen einzudringen. Das gleiche wird auch bei einer Ausgestaltung nach Anspruch 6 erreicht, wenn ein Klebstoff verwendet wird, der durch Wärmeeinwirkung reaktiviert werden kann.

Durch eine Ausgestaltung nach Anspruch 7 wird eine Verstärkung des äußeren Randbereiches einer außen gelegenen Tuchbahn ohne Verdoppelung der Tuchbahn erreicht.

Im folgenden wird die Erfindung anhand mehrerer in der Zeichnung dargestellter Ausführungsbeispiele näher erläutert. Es zeigen:
- Fig. 1: einen ausschnittweise dargestellten Querschnitt zweier Tuchbahnen im Bereich ihrer Verbindungsstelle;
- Fig. 2: eine ausschnittweise dargestellte Draufsicht der beiden Tuchbahnen nach Fig. 1;
- Fig. 3: einen ausschnittweise dargestellten Querschnitt einer der Tuchbahnen mit einem Durchstich;
- Fig. 4: einen ausschnittweise dargestellten Querschnitt der Tuchbahn nach Fig. 3 nach dem Auftragen eines Klebstoffes;
- Fig. 5: eine ausschnittweise dargestellte Draufsicht der Tuchbahn nach Fig. 4.

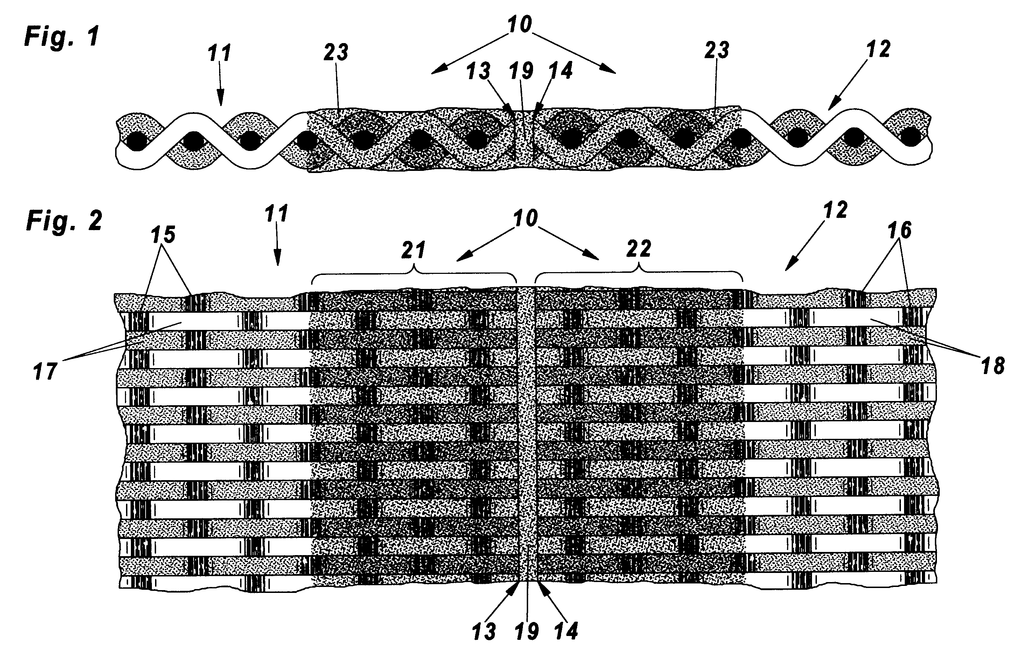

Das aus Fig. 1 und Fig. 2 in starker Vergrößerung ausschnittweise ersichtliche Tuch 10, das als Markisentuch oder als Wintergartenbeschattung verwendet wird, wird durch zwei Tuchbahnen 11 und 12 gebildet, die entlang der einander zugekehrten Längsränder 13 bzw. 14 miteinander dauerhaft verbunden sind. Zur Erleichterung der Darstellung und der Übersicht sind bei beiden Tuchbahnen 11 und 12 die Kettfäden 15 bzw. 16 mit vergrößertem gegenseitigem Abstand und auf gleicher Höhe liegend dargestellt und die Schußfäden 17 bzw. 18 zwar eng beieinander liegend aber stärker verwunden dargestellt, wobei sie zur besseren Unterscheidung abwechselnd mit einer Punktiertung und ohne eine Punktierung dargestellt sind.

Die Tuchbahnen, die im allgemeinen eine Fertigungsbreite von 1,20 m haben, werden auf die für die Gesamtbreite des Tuches 10 erforderliche Bahnbreite geschnitten, wobei gegebenenfalls der sogenannte Rapport eines Flächen- oder Streifenmusters berücksichtigt wird.

Die beiden Tuchbahnen 11 und 12 werden mit den einander zugekehrten Längsrändern 13 und 14 in der gleichen Ebene nebeneinander angeordnet. Dabei können die Längsränder 13 und 14 eng eineinandergestoßen werden oder es kann ein, wenn auch sehr kleiner, Zwischenraum 19 zwischen ihnen freigelassen werden.

Im Randbereich 21 der Tuchbahn 11 und im Randbereich 22 der Tuchbahn 12 wird zumindest auf einer Seite der Tuchbahnen ein Klebstoffauftrag 23 angebracht, der die Randbereiche 21 und 22 durchtränkt und zugleich auch den Zwischenraum 19 zwischen den Längsrändern 13 und 14 ausfüllt.

Der Klebstoff 23 wird mindestens im Ausmaß des Hohlraumvolumens des Gewebes der Tuchbahnen 11 und 12, besser noch mit einem kleinen Überschuß, aufgetragen, wobei er je nach seiner Viskosität sich anfänglich noch teilweise auf der Außenseite der Tuchbahnen befinden kann. Noch vor dem Verfestigen des Klebstoffes wird mittels einer Preßvorrichtung auf den Klebstoffauftrag 23 eine Preßkraft ausgeübt und dabei der Klebstoff in die Hohlräume des Gewebes der Tuchbahnen 11 und 12 hineingepreßt und zugleich auf zumindest annähernd die Dicke der beiden Tuchbahnen gepreßt. Die mit dem Klebstoff in Berührung kommenden Teile der Preßvorrichtung bestehen aus einem Werkstoff oder sind mit einem Werkstoff beschichtet, an dem der Klebstoff nicht haftet.

Je nach der Art des Klebstoffes wird das Verfestigen durch Sauerstoffeinwirkung und/oder durch Feuchtigkeitseinwirkung und/oder durch Wärmeeinwirkung und/oder durch Druckeinwirkung und/oder durch Strahleneinwirkung eingeleitet und bis zur vollständigen Verfestigung durchgeführt. Anschliessend sind die beiden Tuchbahnen 11 und 12 durch den in ihrem Randbereich 21 bzw. 22 eingelagerten und durch den den Zwischenraum 19 zwischen ihnen ausfüllenden Klebstoff 23 dauerhaft miteinander verbunden.

Im Hinblick darauf, daß die Tuchbahnen 11 und 12 aus unterschhiedlichen Gründen mit Stoffen ausgerüstet sind, die teils an den Tuchbahnen anhaften und die teils auch in die Tuchbahnen eingebettet sind, kann die Benetzunsfähigkeit der Tuchbahnen 11 und 12 für den Klebstoff 23 eingeschränkt sein. Um dennoch zumindest punktuell eine gute Durchtränkung der Tuchbahnen mit dem Klebstoff zu erreichen, ist es zweckmäßig, die Tuchbahnen 11 und 12 in ihrem Randbereich 21 bzw. 22 mehrfach zu durchstechen, und zwar am besten in voller Höhe. Die Anzahl und das Anordnungsmuster der Durchstiche richten sich nach den Gegebenheiten der Tuchbahnen und des verwendeten Klebstoffes.

An den Durchstichstellen werden die Gewebefäden der Tuchbahnen zur Seite gedrückt und ein Durchgangsloch geschaffen, das später vom Klebstoff ausgefüllt wird, so daß zumindest punktuell Klebstoffbrücken entstehen, die in der Höhe durch die gesamte Tuchbahn durchgehen. Das Durchstechen wird in vielen Fällen vor dem Auftragen des Klebstoffes 23 erfolgen können, so daß die Durchsteckwerkzeuge mit dem Klebstoff nicht in Berührung kommen. Bei Bedarf kann das Durchstechen aber auch nach dem Auftragen des Klebstoffes erfolgen, wenn etwa Durchstechwerkzeuge verwendet werden, die durch geeignete Beschichtung vor dem Anhaften von Klebstoff bewahrt werden. Das nachträgliche Durchstechen ist z.B. auch dann möglich, wenn der Klebstoff durch Wärmeeinwirkung verfestigt wird und er auch durch Wärmeeinwirkung wieder reaktiviert werden kann. Dann kann nach dem ersten Verfestigen des Klebstoffes das Durchstechen durchgeführt werden. Danach wird der Klebstoff durch Wärmeeinwirkung wieder reaktiviert und zweckmäßigerweise auch eine Preßkraft auf ihn ausgeübt, so daß er in den Hohlraum der Durchstichstellen eindringt und diese ausfüllt.

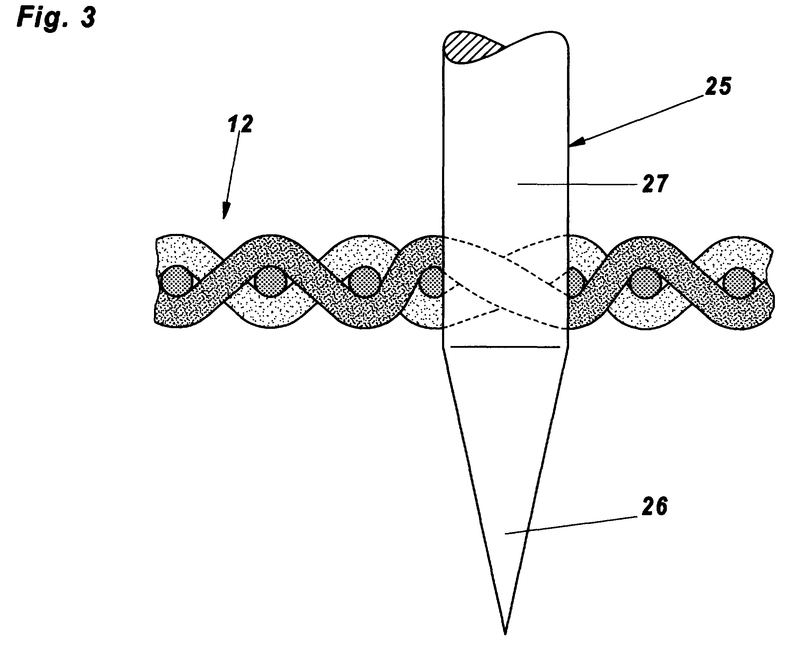

Ganz allgemein ist in Fig. 3 veranschaulicht, wie z.B. die Tuchbahn 12 mittels eines Durchstechwerkzeuges 25 in Form einer Nadel mit kegeliger Spitze 26 und zylindrischem Schaft 27 durchstochen wird. An der Durchstechstelle werden die Kett- und Schußfäden der Tuchbahn 12 etwas zur Seite gedrängt, so daß ein durchgehender und zumindest annähernd zylindrischer Hohlraum zurückbleibt, wenn das Durchstechwerkzeug 25 wieder daraus zurückgezogen worden ist. Dabei kann einer der Kettfäden und/oder der Schußfäden auch einmal durchstochen werden.

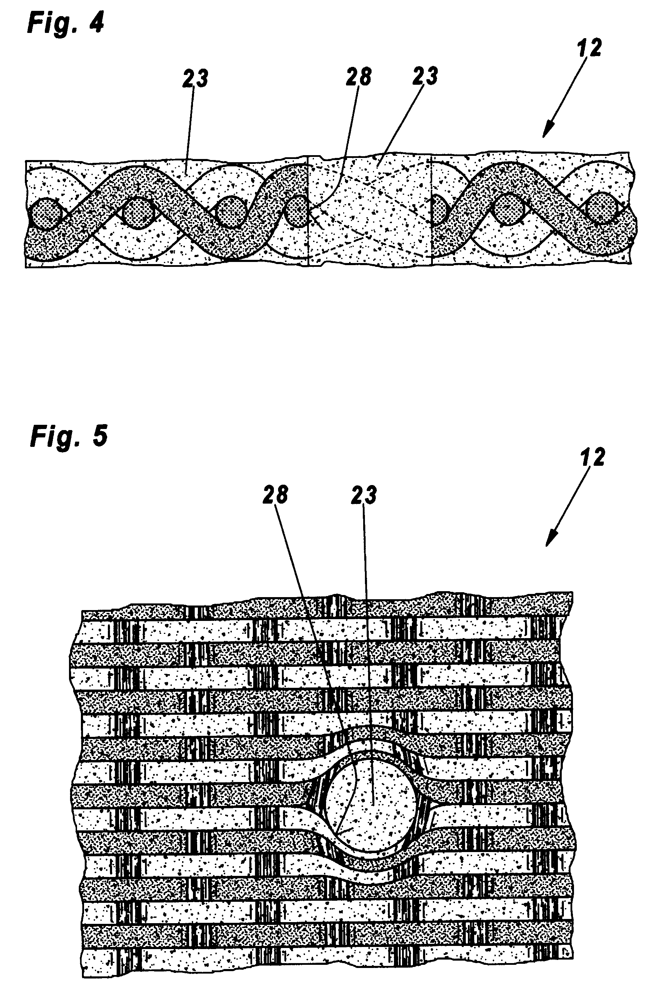

Nach dem Auftragen des Klebstoffes 23 und nach dem zwweckmäßigerweise erfolgenden Pressen des Klebstoffauftrages füllt der Klebstoff 23 einerseits die natürlichen Hohlräume des Gewebes der Tuchbahn 12 und andererseits das durch das Durchstoßen erzeugte Durchgangsloch 28 in der Tuchbahn 12 aus (Fig. 4 und Fig. 5).

Da die Tuchbahnen zum Herstellen eines Markisentuches oder einer Wintergartenbeschattung in der Regel auch an den beiden außen gelegenen Rändern beschnitten werden müssen, um die gewünschte Gesamtbreite des Tuches zu erreichen, und dieser außen gelegene Randbereich vor dem Einreißen bewahrt und deshalb verstärkt sein sollte, ist es zweckmäßig, am äußeren Randbereich der beiden außen gelegenen Tuchbahnen, zumindest auf einer Seite der Tuchbahn, einen Klebstoffauftrag anzubringen, wie er zum Verbinden des einander zugekehrten Längsrandes zweier benachbarter Tuchbahnen beschrieben wurde. Auch hier ist es zweckmäßig, mittels einer Preßvorrichtung auf den Klebstoffauftrag eine Preßkraft auszuüben und den Klebstoffauftrag ebenfalls auf zumindest annähernd die Dicke der Tuchbahn zu pressen. Das Verfestigen erfolgt nach den Gegebenheiten des Klebstoffes.

### Bezugszeichenliste

- 10: Tuch
- 11: Tuchbahn
- 12: Tuchbahn
- 13: Längsrand
- 14: Längsrand
- 15: Kettfäden
- 16: Kettfäden
- 17: Schußfäden
- 18: Schußfäden
- 19: Zwischenraum
- 21: Randbereich
- 22: Randbereich
- 23: Klebstoffauftrag

## Patentansprüche

1. Verfahren zum Herstellen eines Tuches, insbesondere eines Markisentuches, aus einzelnen Tuchbahnen,
**gekennzeichnet** durch die Verfahrensschritte:
- je zwei der Tuchbahnen (11; 12) werden mit den einander zugekehrten Längsrändern (13; 14) in der gleichen Ebene nebeneinander angeordnet,
- zumindest auf der einen Seite der beiden Tuchbahnen (11; 12) wird ein Klebstoffauftrag (23) angebracht,
- - der den Randbereich (21; 22) der beiden Tuchbahnen (11; 12) zumindest zum Teil durchtränkt und
- - der den Zwischenraum (17) zwischen dem Längsrand der beiden Tuchbahnen (11; 12) zumindest zum Teil ausfüllt,
- durch Verfestigen des Klebstoffauftrages (23) werden die beiden Tuchbahnen (11; 12) miteinander dauerhaft verbunden.

2. Verfahren nach Anspruch 1,
**gekennzeichnet** durch den Verfahrensschritt:
- vor dem Verfestigen des Klebstoffes (23) wird mittels einer Preßvorrichtung auf den Klebstoffauftrag (23) eine Preßkraft ausgeübt und der Klebstoffauftrag (23) auf zumindest annähernd die Dicke der beiden Tuchbahnen (11; 12) gepreßt.

3. Verfahren nach Anspruch 1 oder 2,
**gekennzeichnet** durch den Verfahrensschritt:
- das Verfestigen des Klebstoffes (23) wird durch Sauerstoffeinwirkung und/oder durch Feuchtigkeitseinwirkung und/oder durch Wärmeeinwirkung und/oder durch Druckeinwirkung und/oder durch Strahleneinwirkung eingeleitet und bis zur Verfestigung durchgeführt.

4. Verfahren nach Anspruch 1 oder 2,
**gekennzeichnet** durch den Verfahrensschritt:
- der Randbereich (21; 22) der beiden Tuchbahnen (11; 12) wird vor dem Auftragen des Klebstoffes (23) zumindest an einzelnen Stellen (28) zumindest zum Teil durchstochen.

5. Verfahren nach Anspruch 1 oder 2,
**gekennzeichnet** durch die Verfahrensschritte:
- der Randbereich (21; 22) der beiden Tuchbahnen (11; 12) wird nach dem Auftragen des Klebstoffes (23) und zumindest vor Abschluß des Verfestigungsvorganges des Klebstoffes (23) durchstochen,
- der Verfestigungsvorgang des Klebstoffes (23) wird durch Sauerstoffeinwirkung und/oder durch Feuchtigkeitseinwirkung und/oder durch Wärmeeinwirkung und/oder durch Druckeinwirkung und/oder durch Strahleneinwirkung abgeschlossen.

6. Verfahren nach Anspruch 1 oder 2,
**gekennzeichnet** durch die Verfahrensschritte:
- bei Anwendung eines durch Wärme reaktivierbaren Klebstoffes (23) wird nach dem Verfestigen des Klebstoffes (23) der Randbereich (21; 22) der beiden Tuchbahnen (11; 12) zumindest an einzelnen Stellen (28) zumindest zum Teil durchstochen,
- durch Wärmeeinwirkung wird der Klebstoff (23) zumindest im Bereich der Durchstichstellen (28) vorübergehend reaktiviert.

7. Verfahren nach Anspruch 1 oder 2,
**gekennzeichnet** durch die Verfahrensschritte:
- am äußeren Randbereich einer außen gelegenen Tuchbahn wird zumindest auf einer Seite der Tuchbahn ein Klebstoffauftrag angebracht,
- bevorzugt wird vor dem Verfestigen des Klebstoffes mittels einer Preßvorrichtung auf den Klebstoffauftrag eine Preßkraft ausgeübt und der Klebstoffauftrag auf zumindest annähernd die Dicke der Tuchbahn gepreßt,
- der Klebstoff wird durch Sauerstoffeinwirkung und/oder durch Feuchtigkeitseinwirkung und/oder durch Wärmeeinwirkung und/oder durch Druckeinwirkung und/oder durch Strahleneinwirkung verfestigt.
